Europäisches Patentamt

European Patent Office

Office européen des brevets

(11) Publication number: **0 291 578**
**A1**

## EUROPEAN PATENT APPLICATION

(21) Application number: 87118177.2

(22) Date of filing: 08.12.87

(51) Int. Cl.⁴: **A23L 1/237** , **A23L 1/304**

(30) Priority: 20.05.87 PL 265816

(43) Date of publication of application:
23.11.88 Bulletin . 88/47

(84) Designated Contracting States:
CH DE FR GB IT LI SE

(71) Applicant: **Kopalnia Soli "Wieliczka"**
**Park Kingi**
**32-020 Wieliczka(PL)**

(72) Inventor: **Krotkiewski, Marcin**
**Björkhällan 25**
**S-43 600 Askim(SE)**
Inventor: **Rzekiecki, Adam**
**Os. Sienkiewicza 13 m 55**
**PL-32 020 Wieliczka(PL)**
Inventor: **Budka, Wladyslaw**
**Os. Sienkiewicza 11 m 34**
**PL-32 020 Wieliczka(PL)**

(74) Representative: **Hansen, Bernd, Dr.rer.nat. et**
**al**
**Hoffmann, Eitle & Partner Patentanwäite**
**Arabellastrasse 4**
**D-8000 München 81(DE)**

(54) **Table salt enriched in bioelements.**

(57) Table salt enriched in bioelements and containing sodium, potassium and magnesium compounds is characterised in that it contains 40-85 per cent by weight of rock or evaporated salt 5-45 per cent by weight of potassium chloride 2-10 per cent by weight of calcium carbonate and 2-10 per cent by weight of magnesium carbonate. Besides, the salt may contain up to 0.005 per cent by weight of potassium iodide and/or up to 0.003 per cent by weight of sodium selenate and/or up to 0.5 per cent by weight of lyophilised strain of bacteria Streptococcus faecium and/or up to 0.5 per cent by weight of alcoholic herb extract and/or up to 5.0 per cent by weight of zinc sulphate and/or up to 9 per cent by weight of hydrated magnesium chloride and/or up to 6 per cent by weight of powdered herbs and vegetables.

EP 0 291 578 A1

# Table salt enriched in bioelements

The subject of this present invention is table salt enriched in bioelements in the optimum proportions for human organism.

Swedish Patent Specification No. 440,019 describes a table salt product containing sodium chloride and physiologically tolerated potassium and magnesium compounds. The table salt product contains 55-65 per cent of sodium chloride, 20-40 % physiologically tolerated potassium compound and 5-10 per cent of physiologically tolerated magnesium compounds.

The potassium and magnesium compounds occur in the form of chlorides and sulphates

Swedish Patent Specification No 419 654 describes an agent replacing table salt having definite taste and containing a mixture of 20-91 per cent of glycinoamide salt and 9-80 per cent of a taste increasing agent. The table salt replacing agent is added to food in the amount of 0 1-4 0 per cent to obtain salty taste.

Appropriate proportions of mineral components which get into animal organisms indirectly affect the maintenance of proper proportions for human organism. Cow milk, for example contains 0 60-0.86 per cent of mineral components whereas cow milk ash contains $K_2O$ - 25.7%, $Na_2O$ - 11 9%, $CaO$ - 24.7%, $MgO$ - 3.1%, $P_2O_5$ - 21 6%, $Cl$ - 14 0% and $Fe_2O_3$ - 0.3%. The contents of mineral components of milk depends on the amount of mineral components supplied with fodder

The percentage of mineral components in fresh pork meat is as follows: potassium 0 4-0 50 per cent, sodium 0.02-0.08 per cent, calcium 0 02-0 07 per cent, magnesium 0.02-0 05 per cent, iron 0.003-0.01 per cent, phosphorus 0 4-0 5 per cent, chloride 0.01-0.07 per cent and sulphur 0 003-0.040 per cent.

The proportional composition of hen egg ash comprises salts of potassium 31 3 per cent, calcium 2.78 per cent, sodium 31 07 per cent, magnesium 2.79 per cent and iron 0 57 per cent. Animal products show the mineral composition of some elements similar to the demand by human organism. The consumption of sodium should be restricted for health reasons in case of some diseases. This applies to diseases of heart hypertension, certain diseases of kidneys and liver and pregnancy.

As industrialisation advances increasing disproportions occur in the food contents of sodium potassium, magnesium, calcium and microelements. Sodium and calcium many times exceed optimum values in the food taken by man whereas the potassium and magnesium contents in the food taken by man is much lower than the optimum values. Excess sodium gets into human organism by an excessive use of table salt and excess calcium by an excessive consumption of dairy products. A shortage of potassium and magnesium in food is caused by the processing and preservation of corn and other food products. Disadvantageous proportions in food lead to disproportions in the electrolytic system. Excess sodium leads in the human organism to the increased deposition of potassium in renal tubules, which in turn leads to the loss of potassium by the human organism.

The extensive studies carried out in many countries show that the incidence of hypertension is closely related to the disproportion in the assimilation of sodium and potassium by human organism. Appropriate calcium and magnesium proportions are of fundamental importance for many electrophysiological and enzymatic reactions of heart and nervous system. Magnesium is of decisive importance for the utilisation of potassium.

Even if potassium is assimilated by human organism in large amounts, that organism is not able to utilise it since potassium rapidly settles out due to the absence of magnesium. When food contains calcium in large amounts, and magnesium in small amounts, that large amount of calcium lowers the asimilation of magnesium.

The aim of this present invention has been to develop a table salt enriched in bioelements at optimum proportions without changing taste. The table salt as per this present invention, enriched in bioelements and containing sodium, potassium and magnesium compounds is characteris ed in that it contains 40-85 per cent by weight of rock or evaporated salt, 5-45 per cent by weight of potassium chloride and 2-10 per cent by weight of magnesium carbonate. In addition to that, the salt may contain up to 0.005 per cent by weight of potassium iodide and/or up to 0.003 per cent by weight of sodium selenate and/or up to 0.5 per cent by weight of the liophilised strain of bacteria Streptococus faecium and/or up to 0.5 per cent by weight of the alcoholic extract of herbs and/or up to 5 per cent by weight of zinc sulphate and/or up to 9 per cent by weight of hydrated magnesium chloride and up to 6 per cent by weight of powdered herbs and vegetables.

It turned out unexpectedly that thanks to a synergistic action of the combined bioelements coming from rock or evaporated salt, potassium chloride and a mixture of equal proportions of calcium carbonate and magnesium carbonate with an addition of some chemical compounds, bacteria, herbs and vegetables, the salt shows a better assimilation of a whole complex of natural and synthetic bioelements than individual chemical compounds by human organism.

The tests conducted show that the table salt obtained in this manner plays an important role in metabolism by participating in the regulation of blood and tissue fluids, reaction, tonicizes the reaction of nervous and muscular tissues and regulates osmotic pressure and acid-base equilibrium.

The table salt enriched in bioelements as per this present invention does not lump up, retains favourable sensory properties and makes it possible for proportions among individual bioelements to be widely adjusted.

The table salt enriched in bioelements as per this present invention is presented in more detail by the possible embodiments provided below.

Example I

The table salt contains:
- sodium chloride in the form of evaporated salt 60 parts by weight
- edible potassium chloride       34 parts by weight
- calcium carbonate     3 parts by weight
- magnesium carbonate     3 parts by weight
1 kg of the final product contains the following amounts of elements: sodium 238 g, potassium 180 g, calcium 12 g and magnesium 8.5 g.

Example II

The table salt contains:
- sodium chloride in the form of natural laminated lumped rock salt     67.5 parts by weight
- edible potassium chloride             17.5 parts by weight
- hydrated zinc sulphate     5.0parts by weight
- potassium iodide     0.005parts by weight
- hydrated sodium selenate         0.0033parts by weight
- calcium carbonate     4.9917 parts by weight
- magnesium carbonate     5.0 parts by weight
1 kg of the final product contains the following amounts of elements: sodium 246 g, potassium 95 g, calcium 25 g, magnesium 15 g, zinc 12 g, iron 737 mg, lithium 12 mg, manganese 10 mg, copper 1 mg, cobalt 1.5 mg, iodine 39 mg and selenium 8 mg.

Example III

The table salt contains:
- sodium chloride in the form of evaporated salt 40 parts of weight
- edible potassium chloride     30 parts of weight
- hydrated magnesium chloride       9 parts of weight
- lyophilised bacterium strain in water suspension /streptococus faecium, SF-68 strain/     0.5 parts of weight
- alcoholic herb extract     0.5 parts of weight
- calcium carbonate     10.0 parts of weight
- magnesium carbonate     10.0 parts of weight
In the final product the Na:K ratio amounts to 1:1, 6a:Mg to 1:1 and Mg:K to 1:4.

Example IV

The table salt contains:
- sodium chloride in the form of natural laminated lumped rock salt     84 parts by weight
- edible potassium chloride     6 parts by weight
- potassium iodide     0.001 parts by weight
- hydrated sodium selenate     0.001 parts by weight
- powdered herb and vegetable set /consisting of onion, lovage and caraway/     5.998 parts by weight
- calcium carbonate     2.0 parts by weight
- magnesium carbonate     2.0 parts by weight
1 kg of the final product contains the following amounts of elements: sodium 310 g, potassium 19 g, magnesium 7 g, iron 1 g, lithium 16 mg, manganese 13 mg, zinc 3.5 mg, copper 1.5 mg, cobalt 2 mg, selenium 3 mg and iodine 10 mg.

**Claims**

1. A salt composition characterised in that it comprises 40-85 per cent by weight of rock or evaporated salt, 5-45 per cent by weight of potassium chloride, 2-10 per cent by weight of calcium carbonate and 2-10 per cent by weight of magnesium carbonate.

2. A salt composition according to claim 1 characterised in that it comprises up to 0.005 per cent by weight of potassium iodide.

3. A salt composition according to claim 1 or claim 2 characterised in that it comprises up to 0.003 per cent by weight of sodium selenate.

4. A salt composition according to any preceding claim characterised in that it comprises up to 0.5 per cent by weight of lyophilised strain of bacterium Streptococus faecium.

5. A salt composition according to any preceding claim characterised in that it comprises up to 0.5 per cent by weight of alcoholic herb extract.

6. A salt composition according to any preceding claim characterised in that it comprises up to 5 per cent by weight of zinc carbonate.

7. A salt composition according to any preceding claim characterised in that it comprises up to 9 per cent by weight of hydrated magnesium chloride.

8. A salt composition according to any preceding claim characterised in that it comprises up to 6 per cent by weight of powdered herbs and vegetables.

9. A salt composition according to any preceding claim which is a table salt.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 502 324 (PHARMACONSULT) <br> * Claims 1-10; examples 2,3; page 4, lines 15-20; page 4, lines 23-28 * <br> --- | 1,6,7,8 ,9 | A 23 L 1/237 <br> A 23 L 1/304 |
| X | WO-A-8 605 660 (HOWARD FOUNDATION) <br> * Claims 1-3,4,5,6,7; examples 10,11,12; page 11, lines 15-25 * <br> --- | 3,5,6,8 ,9 | |
| A | WO-A-8 500 958 (ROOD) <br> * Claims 1-3 * <br> --- | 1-9 | |
| A | GB-A-2 015 863 (SUOMEN LÄÄKETEHDAS) <br> * Claims 1-12 * & SE-A-440 019 (Cat. D) <br> ----- | 1-9 | |

TECHNICAL FIELDS
SEARCHED (Int. Cl.4)

A 23 L

The present search report has been drawn up for all claims

| Place of search | Date of completion of the search | Examiner |
|---|---|---|
| THE HAGUE | 05-08-1988 | VAN MOER A.M.J. |

EPO FORM 1503 03.82 (P0401)